# EUROPÄISCHE PATENTANMELDUNG

(11) **EP 3 900 530 A1**
(43) Veröffentlichungstag der Anmeldung: **27.10.2021**
(21) Anmeldenummer: 20171170.2
(22) Anmeldetag: 23.04.2020
(51) Int. Cl.: A01M 1/20, A01M 1/02, A01M 1/10

(54) **FLÜSSIGKEITSMANAGEMENT FÜR EINE FANGVORRICHTUNG**

(71) Anmelder: Bayer AG, 51373 Leverkusen (DE)
(72) Erfinder: Die Erfindernennung liegt noch nicht vor
(74) Vertreter: BIP Patents

(57) **Zusammenfassung**

Die vorliegende Erfindung betrifft eine Vorrichtung und ein Verfahren zum Immobilisieren und Identifizieren von Schädlingen und/oder Nützlingen. Ein Gegenstand der vorliegenden Erfindung ist eine Vorrichtung, die mit einer Flüssigkeit befüllt werden kann, um Schädlinge und/oder Nützlinge zu immobilisieren, wobei Mittel dafür sorgen, dass das Niveau der Flüssigkeit in der Vorrichtung innerhalb definierter Grenzen bleibt.

## Beschreibung

Die vorliegende Erfindung betrifft eine Vorrichtung und ein Verfahren zum Immobilisieren und Identifizieren von Schädlingen und/oder Nützlingen. Ein Gegenstand der vorliegenden Erfindung ist eine Vorrichtung, die mit einer Flüssigkeit befüllt werden kann, um Schädlinge und/oder Nützlinge zu immobilisieren, wobei Mittel dafür sorgen, dass das Niveau der Flüssigkeit in der Vorrichtung innerhalb definierter Grenzen bleibt.

Etwa zwei Drittel der gegenwärtig bekannten Tierarten gehören zu den Gliederfüßern (Stamm Arthropoda), die zu 85% von Insekten repräsentiert werden. Ein erheblicher Anteil der Arthropoden ist phytophag: diese Tiere ernähren sich von Pflanzen und können zur Beeinträchtigung des Wachstums führen, Saug- und Fraßschäden verursachen sowie Viruskrankheiten übertragen. Auf diese Weise werden beispielsweise erhebliche Ertrags- und Qualitätsverluste beim Anbau von Kulturpflanzen verursacht.

Neben diesen Schädlingen gibt es Organismen, die beim Anbau von Kulturpflanzen nützlich sind. Solche Nützlinge können natürliche Gegenspieler von Schädlingen sein, indem sie die Bestände von Schädlingen dezimieren oder deren weitere Vermehrung verhindern, weil die Schädlinge ihnen oder ihren Nachkommen als Nahrung dienen. Andere Nützlinge sind essentiell für die Fortpflanzung von Pflanzen: vor allem Bienen, Hummeln, Fliegen und Schmetterlinge nehmen auf der Suche nach Nektar Pollen von einer Blüte auf, übertragen diesen auf benachbarte Blüten und sorgen damit für eine Befruchtung.

In der modernen Landwirtschaft spielt die Erfassung und Erkennung von Nützlingen und/oder Schädlingen innerhalb von landwirtschaftlich genutzten Flächen eine wichtige Rolle.

WO2020058170 und WO2020058175 offenbaren Fangschalen, die mit Wasser und optional weiteren Zusatzstoffen befüllt werden können, um Schädlinge und/oder Nützlinge zu immobilisieren. Eine solche Fangschale kann mit einer Kamera ausgestattet sein. Die Kamera ist in einem definierten Abstand über dem Boden der Schale angebracht, so dass ein Abbild des Bodes der Fangschale auf einen Sensor der Kamera geworfen wird. Ein Ablauf an einer Seite der Schale sorgt dafür, dass Regenwasser, das in die Schale gelangt, über den Ablauf ablaufen kann. Durch den Ablauf steigt das Wasser in der Schale nicht über ein oberes Niveau. Allerdings kann es passieren, dass Wasser aus der Schale verdunstet und die Schale austrocknet. Eine ausgetrocknete Schale ist nicht mehr in der Lage, Schädlinge und/oder Nützlinge zu immobilisieren.

Diesem Problem widmet sich die vorliegende Erfindung.

Das Problem wird durch die Gegenstände der unabhängigen Patentansprüche gelöst. Bevorzugte Ausführungsformen der Erfindung finden sich in den abhängigen Patentansprüchen sowie in der vorliegenden Beschreibung und in den Zeichnungen.

Ein erster Gegenstand der vorliegenden Erfindung ist eine Vorrichtung zum Immobilisieren von Schädlingen und/oder Nützlingen umfassend
- eine Schale zur Aufnahme einer Flüssigkeit,
- einen Vorratsbehälter zur Aufnahme einer Flüssigkeit, wobei der Vorratsbehälter und die Schale über eine Flüssigkeitsverbindung miteinander verbunden sind,
- Mittel zum Befüllen der Schale mit Flüssigkeit aus dem Vorratsbehälter, wobei die Flüssigkeit automatisch aus dem Behälter über die Flüssigkeitsverbindung in die Schale übergeht, wenn Flüssigkeit in der Schale unter ein definiertes Niveau sinkt.

Ein weiterer Gegenstand der vorliegenden Erfindung ist ein Verfahren umfassend die Schritte:
- Fixieren einer Vorrichtung an einem Ort, wobei die Vorrichtung umfasst:
   ∘ eine Schale zur Aufnahme einer Flüssigkeit,
   ∘ einen Vorratsbehälter zur Aufnahme einer Flüssigkeit, wobei der Vorratsbehälter und die Schale über eine Flüssigkeitsverbindung miteinander verbunden sind, wobei die Flüssigkeitsverbindung reversibel verschließbar ist, wobei der Vorratsbehälter eine reversibel verschließbare Auffüllöffnung umfasst,
- Schließen der Flüssigkeitsverbindung
- Öffnen der Auffüllöffnung nach Schließen der Flüssigkeitsverbindung
- Befüllen der Schale und des Vorratsbehälters mit einer Flüssigkeit, wobei der Vorratsbehälter über die geöffnete Auffüllöffnung befüllt wird
- Schließen der Auffüllöffnung nach Befüllen des Vorratsbehälters
- Öffnen der Flüssigkeitsverbindung nach Schließen der Auffüllöffnung.

Ein weiterer Gegenstand der vorliegenden Erfindung ist die Verwendung einer Vorrichtung zum Immobilisieren und/oder Identifizieren von Nützlingen und Schädlingen, vorzugsweise in einem Bereich, in dem Kulturpflanzen angebaut werden, wobei die Vorrichtung umfasst:
- eine Schale zur Aufnahme einer Flüssigkeit,
- einen Vorratsbehälter zur Aufnahme einer Flüssigkeit, wobei der Vorratsbehälter und die Schale über eine Flüssigkeitsverbindung miteinander verbunden sind,
- Mittel zum Befüllen der Schale mit Flüssigkeit aus dem Vorratsbehälter, wobei die Flüssigkeit automatisch aus dem Behälter über die Flüssigkeitsverbindung in die Schale übergeht, wenn Flüssigkeit in der Schale unter ein definiertes Niveau sinkt.

Die Erfindung wird nachfolgend näher beschrieben ohne zwischen den Erfindungsgegenständen (Vorrichtung, Verfahren, Verwendung) zu unterscheiden. Die nachfolgenden Erläuterungen sollen vielmehr für alle Erfindungsgegenstände in analoger Weise gelten, unabhängig davon, in welchem Kontext (Vorrichtung, Verfahren, Verwendung) sie erfolgen.

Wenn in der vorliegenden Beschreibung oder in den Patentansprüchen Schritte in einer Reihenfolge genannt sind, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die erfindungsgemäße Vorrichtung, ihr Aufbau und ihre Funktionsweise lassen sich besonders anschaulich auf Basis einer Vorrichtung beschreiben, die eine Flüssigkeit enthält und an einem Ort aufgestellt oder aufgehängt oder anderweitig fixiert ist. Das soll jedoch nicht bedeuten, dass die Erfindung auf eine mit Flüssigkeit befüllte und fixierte Vorrichtung beschränkt ist. Beispielsweise wird eine erfindungsgemäße Vorrichtung als Verkaufsprodukt üblicherweise ohne eine darin bereits enthaltene Flüssigkeit angeboten und die Vorrichtung ist als Verkaufsprodukt üblicherweise nicht fixiert. Wenn also bei der Beschreibung und/oder der Definition der erfindungsgemäßen Vorrichtung Bezug auf eine Flüssigkeit genommen wird, oder die Vorrichtung in einer definierten Lage beschrieben wird, soll der Schutzumfang selbstverständlich auch eine Vorrichtung ohne jegliche Flüssigkeit in jeglicher Lage umfassen.

Die Erfindung dient zum Immobilisieren von Schädlingen und /oder Nützlingen. Unter einem "Schädling" wird ein mobiler Organismus verstanden, der beim Anbau von Pflanzen in Erscheinung treten und Pflanzen schädigen, oder die Ernte der Pflanzen negativ beeinflussen kann. Vorzugsweise handelt es sich bei dem Schädling um ein Insekt (in den verschiedenen Stadien von Larve (Raupe, Afterraupe) bis zum Adultstadium) oder ein Spinnentier.

Unter einem "Nützling" wird vorzugsweise ein mobiler Organismus verstanden, dem ein Schädling als Nahrungsquelle oder Wirt dient oder der aus anderen Gründen für eine erfolgreiche Ernte von Bedeutung ist (z.B. als Bestäuber). Vorzugsweise handelt es sich bei dem Nützling um ein Insekt (in den verschiedenen Stadien von Larve (Raupe, Afterraupe) bis zum Adultstadium) oder ein Spinnentier. Ganz besonders bevorzugte handelt es sich um einen Bestäuber (Pollenspender) wie beispielsweise eine Biene, Hummel, Fliege oder ein Schmetterling.

Schädlinge und/oder der Nützlinge müssen in dem Sinne "mobil" sein, dass sie autonom in die Schale der Vorrichtung gelangen können.

Die Vorrichtung weist eine Schale auf, innerhalb der Schädlinge und/oder Nützlinge immobilisiert werden. Dies geschieht vorzugsweise mittels einer Flüssigkeit in der Schale. Bei der Flüssigkeit handelt es sich üblicherweise um Wasser, dem ein oder mehrere Zusatzstoffe beigefügt sein können. Ein solcher Zusatzstoff kann beispielsweise ein Tensid zur Erniedrigung der Oberflächenspannung sein. Ein solcher Zusatzstoff kann auch ein Lockstoff zum Anlocken von (spezifischen) Schädlingen und/oder Nützlingen sein. Ein solcher Zusatzstoff kann auch ein Mittel zur Verhinderung von Algenbildung (beispielsweise ein Herbizid) sein. Weitere Zusatzstoffe sind denkbar.

Die Schale weist einen Boden und Wandungen auf. Der Boden kann eben oder gekrümmt sein. Vorzugsweise ist der Boden eben ausgeführt. Der Boden kann glatt ausgeführt sein oder eine Struktur aufweisen. Eine solche Struktur kann Erhebungen und/oder Vertiefungen in der Oberfläche des Bodens umfassen. Eine Struktur hat den Vorteil, dass sie eine Ansammlung von Insekten durch Flüssigkeitsbewegung verhindern kann. Der Boden kann (in der Aufsicht) eine runde, ovale, elliptische, eckige (dreieckig, viereckig, fünfeckig, sechseckig oder allgemein n-eckig, mit n als ganzer Zahl, die größer oder gleich drei ist) oder eine sonstige Form aufweisen. Vorzugsweise hat der Boden (in der Aufsicht) eine runde oder rechteckige (insbesondere quadratische) Form.

Die Wandungen erstrecken sich vorzugsweise konusförmig oder zylinderförmig in einem Winkel im Bereich von 60° bis 120°, vorzugsweise im Bereich von 80° bis 120°, noch mehr bevorzugt im Bereich von 90° bis 110° vom Boden aus, so dass der Boden und die Wandungen einen Raum bilden, der nach einer Seite (nach "oben") offen ist, ansonsten aber durch den Boden und die Wandungen gegenüber der Umwelt abgegrenzt ist. Dieser Raum dient der Aufnahme der Flüssigkeit. Dieser Raum wird in dieser Beschreibung auch als Schaleninnenraum bezeichnet.

Wird Flüssigkeit in den Schaleninnenraum eingebracht, definiert das in dem Schaleninnenraum befindliche Flüssigkeitsvolumen einen Sammelbereich, in dem sich Schädlinge und/oder Nützlinge sammeln können. Dabei können die Schädlinge und/oder Nützlinge auf der Flüssigkeitsoberfläche schwimmen, in dem Flüssigkeitsvolumen schweben und/oder in dem Flüssigkeitsvolumen zum Boden der Schale sinken. Das Volumen des Sammelbereichs wird zu einer Seite durch den Boden der Schale begrenzt, zu weiteren Seiten durch die Wandungen der Schale und zu der offenen Seite der Schale durch die Flüssigkeitsoberfläche.

Die erfindungsgemäße Vorrichtung wird zur erfindungsgemäßen Verwendung üblicherweise an einem Ort aufgestellt, aufgehängt oder anderweitig fixiert. Dabei wird die Vorrichtung so ausgerichtet, dass sich der Boden der Schale horizontal, d.h. parallel zum Untergrund erstreckt.

Die erfindungsgemäße Vorrichtung weist ferner einen Vorratsbehälter auf. Der Vorratsbehälter dient ebenfalls der Aufnahme einer Flüssigkeit, vorzugsweise derselben Flüssigkeit, die auch in die Schale eingebracht wird. Der Vorratsbehälter weist zur Aufnahme der Flüssigkeit einen Vorratsbehälterinnenraum auf, der durch Wandungen begrenzt ist.

Der Vorratsbehälter weist vorzugsweise mindestens eine reversibel verschließbare Auffüllöffnung auf, über die der Vorratsbehälter mit einer Flüssigkeit befüllt werden kann. Die reversibel verschließbare Auffüllöffnung kann beispielsweise mittels eines Schraubverschlusses, eines Stopfens, eines Flansches oder sonstiger Verschlussmittel verschlossen werden. Vorzugsweise sind Dichtungen vorhanden, die die Auffüllöffnung luftdicht verschließen. Vorzugsweise halten die Verschlussmittel (inklusive der Dichtungen falls vorhanden) einem Druck von mindestens 0,1 bar Stand.

Der Vorratsbehälter und die Schale sind über eine Flüssigkeitsverbindung miteinander verbunden. Über die Flüssigkeitsverbindung kann Flüssigkeit von dem Vorratsbehälter in die Schale gelangen. Bei der Flüssigkeitsverbindung kann es sich um eine oder mehrere Öffnungen in einer oder mehreren Wandungen des Vorratsbehälter handeln, durch die Flüssigkeit aus dem Vorratsbehälterinnenraum aus- und in den Schaleninnenraum eintreten kann. Denkbar ist auch, dass Vorratsbehälter und Schale über eine oder mehrere Leitungen und/oder Schläuche und/oder Rinnen miteinander verbunden sind.

In einer bevorzugten Ausführungsform ist mindestens ein Ablauf in mindestens einer der Wandungen der Schale vorhanden, so dass beispielsweise Regenwasser, das in die Schale gelangt, über den mindestens einen Ablauf aus der Schale abfließen kann. Bei dem Ablauf kann es sich um eine oder mehrere Ablauföffnungen in einer oder mehreren Wandungen der Schale handeln. Es ist denkbar, dass an eine solche Ablauföffnung eine Ablaufrinne angebracht ist, um die abfließende Flüssigkeit in eine definierte Richtung zu lenken. Bei der erfindungsgemäßen Verwendung der erfindungsgemäßen Vorrichtung werden die Schale und die Vorrichtung üblicherweise mit einer Flüssigkeit gefüllt, wobei das Niveau der Flüssigkeit (der Flüssigkeitsspiegel) üblicherweise unterhalb des Ablaufs liegt.

Der mindestens eine Ablauf verhindert, dass bei einer mit Flüssigkeit gefüllten Schale das Niveau der Flüssigkeit in der Schale über eine definierte (Ober-)Schwelle ansteigt.

Ferner sind Mittel vorhanden, die verhindern, dass das Niveau der Flüssigkeit in der Schale unter eine definierte (Unter-)Schwelle absinkt (zum Beispiel aufgrund von Verdunstung). Dies kann auf verschiedene Weisen erreicht werden.

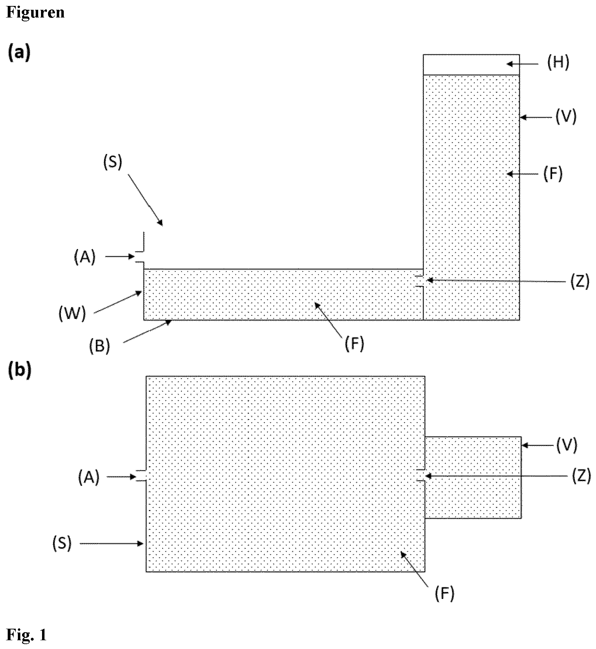

In einer bevorzugten Ausführungsform ragt der Vorratsbehälter oder zumindest die Flüssigkeitsverbindung zwischen dem Vorratsbehälter und der Schale in den Schaleninnenraum hinein. In dieser bevorzugten Ausführungsform weist der Vorratsbehälter beispielsweise ein oder mehrere Öffnungen auf, die den Schaleninnenraum mit dem Vorratsbehälterinnenraum verbinden. Die eine oder die mehreren Öffnungen befinden sich vorzugsweise zwischen dem Boden der Schale und dem mindestens einen Ablauf der Schale (falls vorhanden) oder demjenigen Ende der Wandungen der Schale, das vom Boden weggerichtet ist und den kürzesten Abstand zum Boden aufweist. Der Vorratsbehälterinnenraum erstreckt sich dabei vorzugsweise über das genannte Ende der Wandungen hinaus. Ein Beispiel dieser Ausführungsform ist schematisch in Fig. 1 dargestellt.

Fig. 1 (a) zeigt eine erfindungsgemäße Vorrichtung im Querschnitt von einer Seite, Fig. 1 (b) zeigt die erfindungsgemäße Vorrichtung im Querschnitt in einer Aufsicht.

Die in Fig. 1 dargestellte Ausführungsform der erfindungsgemäßen Vorrichtung weist eine Schale (S) und einen Vorratsbehälter (V) auf. Sowohl die Schale (S) als auch der Vorratsbehälter (V) sind mit einer Flüssigkeit (F) befüllt. Ein Großteil des Vorratsbehälterinnenraums befindet sich oberhalb des Niveaus der Flüssigkeit (F) in der Schale. In einer Wandung (W) der Schale (S) ist ein Ablauf (A) angebracht. Gelangt zum Beispiel Regenwasser in den Schaleninnenraum, steigt das Niveau der Flüssigkeit (F) in dem Schaleninnenraum an, bis es den Ablauf (A) erreicht, danach läuft zusätzliche Flüssigkeit über den Ablauf (A) ab. Der Ablauf (A) stellt damit sicher, dass das Niveau der Flüssigkeit (F) in dem Schaleninnenraum die Höhe des Ablaufs (A) nicht übersteigt. Der Vorratsbehälter (V) und die Schale (S) sind über eine Flüssigkeitsverbindung (Z) miteinander verbunden. Flüssigkeit (F) kann von dem Vorratsbehälter (V) über die Flüssigkeitsverbindung (Z) in die Schale (S) gelangen. Der Vorratsbehälter (V) ist ansonsten geschlossen. Fließt Flüssigkeit (F) von dem Vorratsbehälter (V) über die Flüssigkeitsverbindung (V) in die Schale (S), entsteht im Kopfbereich (H) des Vorratsbehälters (V) ein Unterdruck. Dieser Unterdruck verhindert, dass weitere Flüssigkeit (F) aus dem Vorratsbehälter (V) über die Flüssigkeitsverbindung (V) in die Schale (S) fließt. Erst dann, wenn das Niveau der Flüssigkeit (F) in der Schale (S) unterhalb der Flüssigkeitsverbindung (V) sinkt, kann Luft durch die Flüssigkeitsverbindung (Z) in den Vorratsbehälter (V) strömen und für einen Druckausgleich sorgen. Dann fließt Flüssigkeit (F) aus dem Vorratsbehälter (V) durch die Flüssigkeitsverbindung (Z) in die Schale (S) und gleichzeitig dringt Luft aus der Umgebung der Vorrichtung durch die Flüssigkeitsverbindung (Z) in den Vorratsbehälter (V); das Niveau der Flüssigkeit (F) in der Schale (S) steigt. Das Niveau der Flüssigkeit (F) in der Schale steigt allerdings nur, bis das Niveau der Flüssigkeit (F) über die Flüssigkeitsverbindung (Z) steigt und die Flüssigkeitsverbindung (Z) verschließt. Dann kann keine Luft mehr in den Vorratsbehälter (V) eindringen und für einen Druckausgleich sorgen. Es entsteht ein Unterdruck im Kopfbereich (H) des Vorratsbehälters (V), der einen weiteren Ausfluss der Flüssigkeit (F) verhindert. Diese erfindungsgemäße Lösung sorgt damit dafür, dass die Schale nicht so schnell austrocknet. Solange sich Flüssigkeit (F) in dem Vorratsbehälter (V) befindet, die in die Schale (S) nachströmen kann, trocknet die Schale nicht aus.

Vorzugsweise ist in der Flüssigkeitsverbindung (Z) zwischen dem Vorratsbehälter (V) und der Schale (S) ein Gitter oder ein Netz oder ein Schwamm oder ein Sprudelstein (wie er beispielsweise in der Aquaristik zur Erzeugung von feinen Glasbläschen eingesetzt wird, siehe z.B. DE202006001551 U1) eingebracht. Ein solcher Strömungsregulator hat den Vorteil, dass die im Falle eines Druckausgleichs in den Vorratsbehälter (V) strömende Luft reguliert und so größere Luftblasen, Luftstöße und damit verbundene Druckwellen innerhalb der Flüssigkeit (F) verringert oder unterbunden werden.

Vorzugsweise ist das Volumen des Vorratsbehälterinnenraums größer als das Volumen in der Schale, das von einer Flüssigkeit eingenommen werden kann (das Volumen des Sammelbereichs) - auch, wenn Figuren 1, 2 und 3 einen anderen Eindruck erwecken.

Vorzugsweise ist die Auffüllöffnung zum Befüllen und/oder Auffüllen des Vorratsbehälters mit einer Flüssigkeit in einer Wandung im Kopfbereich angebracht. Wie bereits ausgeführt, ist die Auffüllöffnung vorzugsweise reversibel verschließbar.

Vorzugsweise ist (auch) die Flüssigkeitsverbindung reversibel verschließbar ausgeführt. Vorzugsweise wirken der Verschluss der Auffüllöffnung und der Verschluss der Flüssigkeitsverbindung in der Weise zusammen, dass die Flüssigkeitsverbindung nur dann geöffnet werden kann, wenn die Auffüllöffnung verschlossen ist. Dies verhindert ein ungewolltes Leerlaufen des Vorratsbehälters. Dieses Zusammenwirken kann beispielsweise durch einen Schieber erreicht werden. Der Schieber wird entweder manuell oder automatisch betätigt, wenn die Auffüllöffnung geöffnet und geschlossen wird. Der Schieber kann dabei zwei Zustände annehmen, einen ersten Zustand, wenn die Auffüllöffnung geöffnet ist, und einen zweiten Zustand, wenn die Auffüllöffnung geschlossen ist. In dem ersten Zustand blockiert der Schieber den Öffnungsmechanismus zum Öffnen der Flüssigkeitsverbindung; in dem zweiten Zustand gibt der Schieber den Öffnungsmechanismus zum Öffnen der Flüssigkeitsverbindung wieder frei.

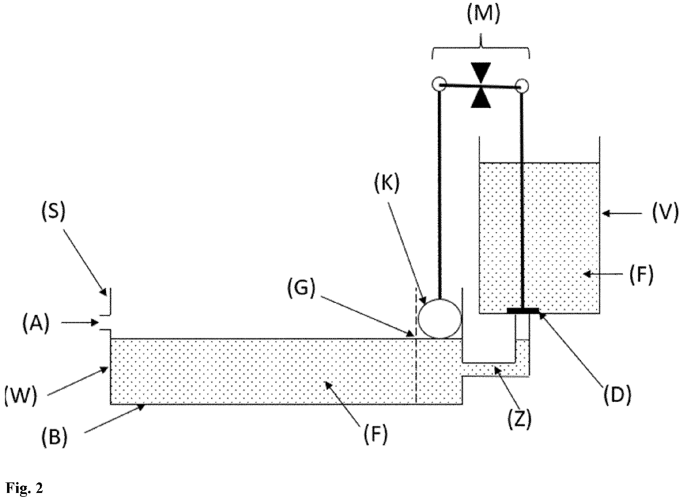

Fig. 2 zeigt eine weitere bevorzugte Ausführungsform der erfindungsgemäßen Vorrichtung im Querschnitt in einer Seitenansicht. In die Schale (S) ist ein Schwimmer (K) eingebracht, der auf der Flüssigkeit (F) schwimmt. Der Schwimmer (K) ist über ein Gitter (G) vom Rest des Schaleninnenraums abgetrennt. Das Gitter (G) dient der Führung des Schwimmers (K); das Gitter (G) verhindert eine Seitwärtsbewegung des Schwimmer (K); der Schwimmer (K) kann sich aufgrund des Gitters (G) nur nach oben (vom Boden (B) der Schale (S) weg) oder nach unten (in Richtung des Bodens (B) der Schale (S)) bewegen. Die Vorrichtung umfasst ferner einen Vorratsbehälter (V), der über eine Flüssigkeitsverbindung (Z) mit der Schale (S) verbunden ist. Im Bodenbereich des Vorratsbehälter (V) befindet sich eine Öffnung, die zur Flüssigkeitsverbindung (Z) führt. Diese Öffnung ist durch einen Verschluss (D) verschlossen. Der Verschluss (D) ist über einen Hebelmechanismus (M) mit dem Schwimmer (K) verbunden. Sinkt das Niveau der Flüssigkeit (F) in der Schale (S), so sinkt der Schwimmer (K) in Richtung des Bodens. Dabei zieht der Schwimmer (K) über den Hebelmechanismus (M) an dem Verschluss (D), wodurch die Öffnung in dem Bodenbereich des Vorratsbehälters frei wird. Es kann Flüssigkeit (F) aus dem Vorratsbehälter (V) durch die Öffnung und die Flüssigkeitsverbindung (Z) in die Schale (S) fließen. Dadurch steigt das Niveau der Flüssigkeit (F) in der Schale (S) an, und der Schwimmer (K) steigt ebenfalls. Dabei drückt der Schwimmer (K) über den Hebelmechanismus (M) den Verschluss (D) nach unten, und der Verschluss (D) verschließt die Öffnung im Bodenbereich des Vorratsbehälters (V). Dies hat zur Folge, dass keine weitere Flüssigkeit (F) aus dem Vorratsbehälter (V) in die Schale (S) fließen kann. Der Schwimmer (K) in Kombination mit dem Hebelmechanismus (M) und dem Verschluss (D) sorgt also dafür, dass Flüssigkeit in die Schale fließt, sobald eine untere Schwelle des Niveaus der Flüssigkeit unterschritten wird. Ein Austrocknen der Schale (S) wird verhindert. Das in Fig. 2 dargestellte Prinzip wird beispielsweise auch bei Spülkästen für Toiletten verwendet, um die Spülkästen nach einem Toilettenspülgang wieder mit Wasser zu befüllen. Dabei gibt es zahlreiche unterschiedliche Ausgestaltungen. Alle diese Ausgestaltungen können auch bei der erfindungsgemäßen Vorrichtung verwirklicht werden. Die folgenden Dokumente geben einen Überblick über verschiedene Ausgestaltungen. Diese Dokumente sind durch Bezugnahme vollständig in diese Beschreibung aufgenommen: EP0731230A, EP1719845A, EP1580338A, EP0915210A, EP0424622A, EP2141294A, EP0185940A, EP3400342A, DE3153689A, DE19647779A, AT520940, DE102010035946A, EP2700759A.

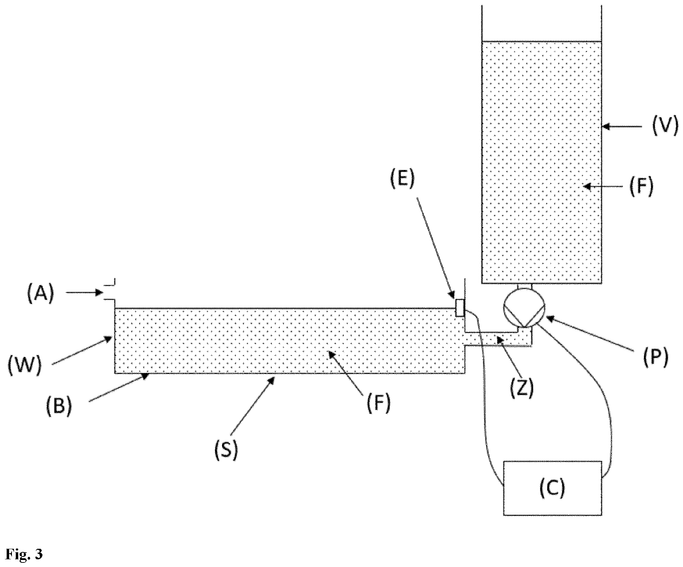

Fig. 3 zeigt schematisch eine weitere Ausführungsform der erfindungsgemäßen Vorrichtung in einer Seitenansicht im Querschnitt. In der Schale (S) ist ein Sensor (E) angebracht. Sinkt das Niveau der Flüssigkeit (F) in der Schale (S) unterhalb einer unteren Schwelle, übermittelt der Sensor (E) ein erstes Signal an eine Steuer- und Kontrolleinheit (C). Die Steuer- und Kontrolleinheit (C) aktiviert bei Erreichen des ersten Signals eine Pumpe (P). Mittels der Pumpe (P) wird Flüssigkeit (F) aus dem Vorratsbehälter (V) in die Schale (S) befördert. Dabei steigt das Niveau der Flüssigkeit (F) in der Schale (S) an. Erreicht das Niveau der Flüssigkeit (F) in der Schale (S) eine obere Schwelle, übermittelt der Sensor (E) ein zweites Signal an die Steuer- und Kontrolleinheit (C). Die Steuer- und Kontrolleinheit (C) schaltet bei Erreichen des zweiten Signals die Pumpe (P) aus, so dass keine weitere Flüssigkeit (F) aus dem Vorratsbehälter (V) in die Schale (S) befördert wird. Es ist auch denkbar, dass die Flüssigkeit (F) nicht mittels einer Pumpe (P) in die Schale befördert wird, sondern aufgrund der Schwerkraft selbstständig in die Schale (S) fließt. In einem solchen Fall kann die Pumpe durch ein Ventil ersetzt werden, das durch die Steuer- und Kontrolleinheit (C) geöffnet wird, wenn das Niveau der Flüssigkeit (F) in der Schale (S) unterhalb einer unteren Schwelle sinkt, und geschlossen wird, wenn die Flüssigkeit (F) in der Schale (S) eine obere Schwelle erreicht. Es ist denkbar, dass zwei verschiedene Sensoren vorhanden sind: ein erster Sensor, der anzeigt, wenn das Niveau der Flüssigkeit (F) in der Schale (S) eine untere Schwelle unterschreitet, und ein zweitet Sensor, der anzeigt, wenn das Niveau der Flüssigkeit (F) in der Schale (S) eine obere Schwelle erreicht.

Es ist denkbar, die in den Figuren 1 bis 3 gezeigten Ausführungsformen miteinander zu kombinieren. So ist es beispielsweise denkbar, dass der in Fig. 2 gezeigte Schwimmer einen Schalter betätigt, über den ein Ventil geöffnet oder geschlossen wird, oder über den die in Fig. 3 gezeigte Pumpe an- oder ausgeschaltet wird. Weitere Kombinationen sind denkbar.

In einer bevorzugten Ausführungsform umfasst die erfindungsgemäße Vorrichtung mindestens eine Halterung für mindestens eine Kamera und/oder mindestens eine Kamera.

Mit einer solchen Kamera können digitale Bildaufnahmen erzeugt werden. Eine solche Kamera umfasst einen Bildsensor und optische Elemente. Der Bildsensor ist eine Vorrichtung zur Aufnahme von zweidimensionalen Abbildern aus Licht auf elektrischem Weg. Üblicherweise handelt es sich um halbleiterbasierte Bildsensoren wie beispielsweise CCD- (CCD = *charge-coupled device*) oder CMOS-Sensoren (CMOS = *complementary metal-oxide-semiconductor*). Die optischen Elemente (Linsen, Blenden und dergleichen) dienen einer möglichst scharfen Abbildung des Objektes, von dem eine digitale Bildaufnahme erzeugt werden soll, auf dem Bildsensor.

Die mindestens eine Halterung und/oder die mindestens eine Kamera ist/sind so positioniert, dass der gesamte Sammelbereich oder zumindest ein Teil des Sammelbereichs auf dem mindestens einen Bildsensor abgebildet wird. Es ist denkbar, mehrere Kameras zu verwenden, die verschiedene Bereiche des Sammelbereichs auf dem jeweiligen Bildsensor abbilden. Bei einer solchen Verwendung mehrerer Kameras ist es vorteilhaft, wenn sich die abgebildeten Bereiche zumindest teilweise überlappen, um aus den einzelnen Bildaufnahmen zu einem späteren Zeitpunkt einfacher ein Gesamtbild erzeugen zu können.

An der mindestens einen Halterung lässt sich mindestens eine Kamera vorzugsweise reversibel fixieren. Die mindestens eine Halterung befindet sich vorzugsweise in einem definierten und gleichbleibenden Abstand zum Sammelbereich und gewährleistet damit einen definierten und gleichbleibenden Abstand zwischen dem mindestens einen Bildsensor und dem Sammelbereich.

Es ist denkbar, dass die erfindungsgemäße Vorrichtung mit mindestens einer Quelle für elektromagnetische Strahlung, vorzugsweise im sichtbaren, infraroten und/oder ultravioletten Bereich des Spektrums ausgestattet ist. Mit einer solchen Quelle für elektromagnetische Strahlung kann der Sammelbereich ausgeleuchtet werden, so dass digitale Bildaufnahmen gleichbleibender Qualität unabhängig vom Sonnenlicht (also beispielsweise auch nachts) erzeugt werden können.

In einer bevorzugten Ausführungsform weist die erfindungsgemäße Vorrichtung eine Energieversorgung auf, zum Beispiel, um die eine vorhandene Kamera und/oder eine vorhandene Pumpe und/oder eine vorhandene Steuer- und Kontrolleinheit und/oder ein elektrisch ansteuerbares Ventil mit elektrischer Energie zu versorgen. Bei der Energieversorgung kann es sich beispielsweise um eine elektrochemische Zelle (Batterie), einen wiederaufladbaren Akkumulator, ein Solarpanel, eine Brennstoffzelle, ein Windrad mit einen Generator und/oder um eine andere Quelle für elektrische Energie handeln.

Vorzugsweise weist die erfindungsgemäße Vorrichtung Mittel auf, mit der die Vorrichtung auf einem Boden oder in einem Boden stationiert werden kann. Vorzugsweise lässt sich die Vorrichtung in dem Boden befestigen, um ein Umstürzen zum Beispiel bei Sturm zu verhindern. Vorzugsweise sind Mittel vorhanden, mit denen der Abstand zwischen Boden und Sammelbereich variiert werden kann. Ein Beispiel einer solchen Höhenverstellung ist ein Teleskopstab, der mit einem Ende im Boden befestigt werden kann und an dessen anderem Ende der Sammelbereich angebracht werden kann. Ein anderes Beispiel einer Höhenverstellung ist eine Hebebühne. Eine solche variable Höhenverstellung ermöglicht es, den Sammelbereich oberhalb von Pflanzen zu positionieren, so dass Fluginsekten den Sammelbereich bei einem Überflug über die Pflanzen erkennen können. Die variable Höhenverstellung erlaubt ein Anpassen der Höhe des Sammelbereichs (Abstand zum Boden) an die wachsenden Pflanzen, um zu verhindern, dass die umgebenden Pflanzen den Sammelbereich verdecken. In einer bevorzugten Ausführungsform erfolgt die Höhenverstellung automatisch, ist jedoch auch manuell möglich. Sie passt sich vorzugsweise so an, dass der Sammelbereich stets oberhalb oder auf der Höhe der umgebenden Pflanzen liegt. Dies kann durch Abstandssensoren und/oder Helligkeitssensoren bewerkstelligt werden.

Es ist aber auch denkbar, dass die erfindungsgemäße Vorrichtung über Mittel verfügt, mit denen sie an einer Pflanze oder einem anderen Gegenstand befestigt werden kann, wie beispielsweise mittels eines Hakens oder einer Schlinge oder einem Gurt zum Befestigen an einem Ast oder Zweig oder Stamm.

Die erfindungsgemäße Vorrichtung kann weitere Merkmale aufweisen, insbesondere Merkmale, die in der Offenlegung WO2020058170 und/oder der Offenlegung WO2020058175 beschrieben sind. Die genannten Offenlegungen sind hiermit per Bezugnahme vollständig in diese Beschreibung aufgenommen.

## Patentansprüche

1. Vorrichtung umfassend
• eine Schale zur Aufnahme einer Flüssigkeit,
• einen Vorratsbehälter zur Aufnahme einer Flüssigkeit, wobei der Vorratsbehälter und die Schale über eine Flüssigkeitsverbindung miteinander verbunden sind,
• Mittel zum Befüllen der Schale mit Flüssigkeit aus dem Vorratsbehälter, wobei die Flüssigkeit automatisch aus dem Behälter über die Flüssigkeitsverbindung in die Schale übergeht, wenn Flüssigkeit in der Schale unter ein definiertes Niveau sinkt.

2. Vorrichtung gemäß Anspruch 1, umfassend
• eine Schale mit einem Schaleninnenraum zur Aufnahme einer Flüssigkeit, wobei die Schale einen vorzugsweise ebenen oder strukturierten Boden und Wandungen umfasst, wobei die Wandungen mindestens einen Ablauf für eingetragenes Regenwasser umfassen,
• einen Vorratsbehälter mit einem Vorratsbehälterinnenraum zur Aufnahme einer Flüssigkeit,
**dadurch gekennzeichnet, dass** der Vorratsbehälterinnenraum über mindestens eine Öffnung mit dem Schaleninnenraum verbunden ist, wobei sich die mindestens eine Öffnung in einer Höhe befindet, die zwischen dem Boden der Schale und dem Ablauf liegt, wobei der Vorratsbehälter ansonsten geschlossen ist oder über mindestens eine Auffüllöffnung verfügt, wobei die mindestens Auffüllöffnung mit einem ersten Verschluss reversibel verschlossen werden kann.

3. Vorrichtung gemäß Anspruch 2, wobei in die mindestens eine Öffnung ein Strömungsregulator in Form eines Gitters, eines Netzes, eines Schwammes und/oder eines Sprudelsteins eingebracht ist.

4. Vorrichtung gemäß einem der Ansprüche 2 bis 3, wobei die Vorrichtung einen zweiten Verschluss aufweist, mit dem die mindestens eine Öffnung reversibel verschlossen werden kann, wobei der zweite Verschluss in der Weise mit dem ersten Verschluss zusammenwirkt, dass die mindestens eine Öffnung nur dann geöffnet werden kann, wenn die Auffüllöffnung verschlossen ist.

5. Vorrichtung gemäß Anspruch 1, wobei die Vorrichtung einen Schwimmer umfasst, wobei der Schwimmer mit einem Verschluss verbunden ist, wobei der Verschluss die Flüssigkeitsverbindung zwischen der Schale und dem Vorratsbehälter reversibel verschließt, wobei der Schwimmer vertikal beweglich ausgeführt ist, wobei der Schwimmer so angeordnet ist, dass er bei Unterschreiten einer unteren Höhenschwelle eine Kraft auf den Verschluss ausübt, die dazu führt, dass die Flüssigkeitsverbindung geöffnet wird.

6. Vorrichtung gemäß Anspruch 5, wobei der Schwimmer so angeordnet ist, dass er bei Erreichen einer oberen Höhenschwelle eine Kraft auf den Verschluss ausübt, die dazu führt, dass die Flüssigkeitsverbindung geschlossen wird.

7. Vorrichtung gemäß Anspruch 1, wobei die Vorrichtung über mindestens einen Sensor und eine Steuer- und Kontrolleinheit und eine Pumpe und/oder ein Ventil in der Flüssigkeitsverbindung verfügt, wobei der mindestens eine Sensor in der Schale angebracht ist, wobei der mindestens eine Sensor konfiguriert ist, ein erstes Signal an die Steuer- und Kontrolleinheit zu übermitteln, wenn eine Flüssigkeit in der Schale auf ein unteres Niveaus absinkt, und ein zweites Signal an die Steuer- und Kontrolleinheit zu übermitteln, wenn die Flüssigkeit in der Schale auf ein oberes Niveau ansteigt, wobei die Steuer- und Kontrolleinheit konfiguriert ist, beim Empfangen des ersten Signals die Pumpe einzuschalten und/oder das Ventil zu öffnen, und beim Empfangen des zweiten Signals die Pumpe auszuschalten und/oder das Ventil zu schließen.

8. Vorrichtung gemäß einem der Ansprüche 1 bis 7, wobei die Vorrichtung über mindestens eine Halterung für mindestens eine Kamera verfügt, wobei sich die mindestens eine Halterung in einem definierten Abstand zum Boden der Schale befindet oder in einen solchen gebracht werden kann.

9. Verfahren umfassend die Schritte:
• Fixieren einer Vorrichtung an einem Ort, wobei die Vorrichtung umfasst:
∘ eine Schale zur Aufnahme einer Flüssigkeit,
∘ einen Vorratsbehälter zur Aufnahme einer Flüssigkeit, wobei der Vorratsbehälter und die Schale über eine Flüssigkeitsverbindung miteinander verbunden sind, wobei die Flüssigkeitsverbindung reversibel verschließbar ist, wobei der Vorratsbehälter eine reversibel verschließbare Auffüllöffnung umfasst,
• Schließen der Flüssigkeitsverbindung
• Öffnen der Auffüllöffnung nach Schließen der Flüssigkeitsverbindung
• Befüllen der Schale und des Vorratsbehälters mit einer Flüssigkeit, wobei der Vorratsbehälter über die geöffnete Auffüllöffnung befüllt wird
• Schließen der Auffüllöffnung nach Befüllen des Vorratsbehälters
• Öffnen der Flüssigkeitsverbindung nach Schließen der Auffüllöffnung.

10. Verfahren gemäß Anspruch 9 umfassend die Schritte:
• Fixieren einer Vorrichtung gemäß einem der Ansprüche 1 bis 8 an einem Ort,
• Schließen der Flüssigkeitsverbindung
• Öffnen der Auffüllöffnung nach Schließen der Flüssigkeitsverbindung
• Befüllen der Schale und des Vorratsbehälters mit einer Flüssigkeit, wobei der Vorratsbehälter über die geöffnete Auffüllöffnung befüllt wird
• Schließen der Auffüllöffnung nach Befüllen des Vorratsbehälters
• Öffnen der Flüssigkeitsverbindung nach Schließen der Auffüllöffnung.

11. Verfahren gemäß einem der Ansprüche 9 oder 10, ferner umfassend den Schritt:
• Anbringen mindestens einer Kamera an mindestens einer Halterung der Vorrichtung.

12. Verfahren gemäß Anspruch 11, ferner umfassend den Schritt:
• Erzeugen einer oder mehrerer digitaler Bildaufnahmen mittels der mindestens einen Kamera von einem Bereich innerhalb der Schale, in dem sich die Flüssigkeit befindet, wobei der Bereich einen oder mehrere Nützlinge und/oder Schädlinge umfasst.

13. Verwendung einer Vorrichtung zum Immobilisieren und/oder Identifizieren von Nützlingen und Schädlingen, vorzugsweise in einem Bereich, in dem Kulturpflanzen angebaut werden, wobei die Vorrichtung umfasst:
• eine Schale zur Aufnahme einer Flüssigkeit,
• einen Vorratsbehälter zur Aufnahme einer Flüssigkeit, wobei der Vorratsbehälter und die Schale über eine Flüssigkeitsverbindung miteinander verbunden sind,
• Mittel zum Befüllen der Schale mit Flüssigkeit aus dem Vorratsbehälter, wobei die Flüssigkeit automatisch aus dem Behälter über die Flüssigkeitsverbindung in die Schale übergeht, wenn Flüssigkeit in der Schale unter ein definiertes Niveau sinkt.

14. Verwendung gemäß Anspruch 13, wobei es sich bei der Vorrichtung um eine Vorrichtung gemäß einem der Ansprüche 1 bis 8 handelt.
